# FASCICULE DE BREVET EUROPEEN

(11) **EP 1 675 743 B1**
(45) Date de publication et mention de la délivrance du brevet: **13.02.2008**
(21) Numéro de dépôt: 04791520.2
(22) Date de dépôt: 13.10.2004
(51) Int. Cl.: B60L 5/40

(54) **DISPOSITIF DE CAPTAGE D'ENERGIE ELECTRIQUE AU SOL A SECURITE RENFORCEE POUR L'ALIMENTATION D'UN VEHICULE TERRESTRE**
HOCHSICHERE VORRICHTUNG ZUM AUFFANGEN VON ELEKTRISCHER ENERGIE AUF DEM BODEN ZUR VERSORGUNG EINES LANDFAHRZEUGS
HIGH SECURITY DEVICE FOR CAPTURING ELECTRIC ENERGY ON THE GROUND FOR SUPPLYING A LANDBORNE VEHICLE

(30) Priorité: 20.10.2003 FR 0312259
(43) Date de publication de la demande: 05.07.2006
(73) Titulaire: LOHR INDUSTRIE, 67980 Hangenbieten (FR)
(72) Inventeur: LOHR, Robert, F-67980 Hangenbieten (FR); DONNARD, René, F-67310 Westhoffen (FR)
(74) Mandataire: Metz, Paul
(86) Numéro de dépôt international: PCT/FR2004/002607
(87) Numéro de publication internationale: WO 2005/042295

(56) Documents cités:
- DE-A- 2 519 976
- ES-A- 2 021 538
- JP-A- 62 181 929
- US-A- 3 848 712
- US-A- 4 083 439

## Description

La présente invention concerne un dispositif de captage d'énergie électrique au sol à double sécurité pour l'alimentation d'un véhicule terrestre, notamment un véhicule terrestre de transport de passagers ou de marchandises, de transport en commun urbain sur pneus ou ferroviaire, ou un chariot de manutention industriel.

L'invention est particulièrement adaptée à l'alimentation électrique d'un véhicule de transport en commun urbain autoguidé à propulsion électrique, ce véhicule pouvant être de type ferroviaire ou à pneumatiques. L'invention n'est cependant pas limitée à cette application préférentielle.

Ce type de véhicule à propulsion ou traction électrique est de manière classique alimenté en énergie par des câbles aériens ou des caténaires disposés au-dessus de leurs voies de circulation.

La tendance actuelle consiste cependant, pour des raisons d'esthétisme ou autres, à supprimer ces lignes aériennes électrifiées et à les remplacer par des systèmes d'alimentation au niveau du sol ou enterrés.

On est alors confronté à un important problème de sécurité. En effet, ces véhicules requièrent pour leur alimentation un courant continu de tension relativement importante qui peut s'avérer extrêmement dangereux pour les êtres humains.

Le système de captage d'énergie électrique au sol doit donc impérativement être protégé de manière à rendre impossible un contact volontaire ou accidentel avec les conducteurs d'alimentation et les pièces polaires et ainsi assurer la sécurité des passagers, des piétons, des autres usagers de la chaussée ou du personnel dans le cas d'un chariot d'usine.

Le but de l'invention est de fournir un système de captage de l'énergie électrique au sol parfaitement sécurisé, utilisable pour ce type de véhicules.

On connaît déjà, par le brevet FR 2.735.728 au nom du déposant, un ensemble d'alimentation électrique et de guidage le long d'un rail au sol pour un véhicule de transport urbain sur roues.

Cet ensemble se compose d'un support pivotant relevable de guidage, porteur d'un couple de galets de guidage en « V », coopérant avec un rail au sol qui présente une âme centrale utilisée comme piste de roulement par les galets de guidage et des conducteurs d'alimentation électrique.

L'âme centrale comporte des pièces de recouvrement flexibles constituant une fermeture linéaire de l'espace renfermant les conducteurs en dehors de la zone de passage du support de guidage qui provoque l'ouverture momentanée de cette fermeture au passage des pièces de contact en appui sur les conducteurs.

Les parties conductrices de ce système antérieur d'alimentation électrique sont protégées par des pièces de recouvrement flexibles qui ne se soulèvent localement que lors du passage de la tête de guidage du véhicule.

S'il offre une isolation accrue du système de captage d'énergie, ce dispositif antérieur n'est pas parfaitement sécurisé. En effet, les pièces sous tension pourraient être atteintes sans trop de difficulté en cas d'insertion malveillante ou accidentelle d'un élément métallique allongé sous l'une des pièces de recouvrement flexible. L'invention décrite dans le brevet US 3,848,712 FLODELL se rapporte à un dispositif d'alimentation électrique d'un véhicule présentant une protection supérieure mécanique et électrique du type à deux lèvres jointives soulevées localement par le soc de captage lors de son passage et revenant automatiquement par rappel élastique en position de fermeture après le passage du soc.

Ce dispositif procure une protection contre l'entrée de salissures et d'objets divers ainsi que dans une certaine mesure une protection anti-pénétration.

Si ce dispositif permet d'assurer une protection supérieure, il n'existe aucune protection inférieure puisque les conducteurs électriques sous tension 12 et 27 sont noyés vers le haut dans la matière isolante occupant la partie supérieure du rail d'alimentation. Seul est directement accessible en l'absence du soc, le conducteur 9 relié à la terre.

Il semblerait qu'une protection interne de sécurité ne soit pas nécessaire. Pourtant, après franchissement de la protection supérieure à lèvres jointives, un objet d'une certaine taille ou forme, notamment électriquement conducteur, peut toucher les conducteurs électriques sous tension, même disposés en retrait et provoquer des dégâts et un choc électrique à la personne qui le tiendrait.

Le problème de la double protection n'est pas posé dans cette invention. Elle ne peut constituer la solution à celui-ci.

Afin d'assurer un niveau de sécurité supérieur, le dispositif de captage d'énergie électrique au sol selon l'invention comprend un soc de captage porté par un bras de maintien solidaire du véhicule, qui comporte au niveau de son extrémité inférieure des parties conductrices, reliées électriquement au circuit d'alimentation du véhicule, ce soc étant isolé électriquement du sol et des structures de voie.

D'autre part, il comprend, enterrées dans le sol, deux pièces polaires linéaires montées dans deux porte-pièces profilés disposés côte à côte en regard, filant le long de la voie et portés par un support profilé porteur à fond sensiblement plat et à deux parois latérales.

Selon une caractéristique essentielle de l'invention, chacun de ces porte-pièces est monté sur toute sa longueur en rappel élastique de rapprochement vers son homologue adjacent par un moyen linéaire élastique compressible logé entre le porte-pièce et la paroi latérale correspondante du support profilé porteur.

Le passage du véhicule provoque l'écartement local des deux porte-pièces par la partie inférieure du soc de captage et pendant tout le parcours, les parties conductrices du soc se trouvent maintenues en permanence en contact électrique glissant le long des pièces polaires linéaires.

De préférence, le moyen linéaire élastique qui engendre la force de rappel en rapprochement des deux porte-pièces en regard est à chaque fois un corps tubulaire élastique, susceptible de compression latérale, logé dans l'espace existant entre le porte-pièce et la paroi latérale correspondante du support porteur.

Ce moyen de rappel élastique force les deux porte-pièces en rapprochement l'un vers l'autre. Il assure ainsi un bon contact entre les pièces polaires et les parties conductrices du soc lorsque celui-ci est présent. En l'absence du véhicule ou dans les zones où le soc est absent, il pousse ces deux porte-pièces l'un vers l'autre jusqu'à ce qu'ils arrivent en contact de butée, fermant ainsi l'accès aux éléments polaires dangereux.

L'éloignement et la protection des pièces sous tension assurent déjà une première sécurité.

De manière à renforcer encore la sécurité, il peut en outre être prévu que la surface au sol au-dessus des pièces polaires soit protégée électriquement par une couverture d'isolation qui s'ouvre localement par le passage du soc et se referme ensuite.

Le dispositif de captage d'énergie selon l'invention présente alors un double niveau de sécurité le rendant parfaitement fiable.

D'autres caractéristiques et avantages de l'invention apparaîtront dans la description qui suit, donnée à titre d'exemple et accompagnée des dessins dans lesquels :
- la figure 1 est une vue générale en perspective du dispositif de captage au sol selon l'invention lors du passage du soc de captage dans le cas d'une variante mettant en oeuvre deux demi-rails de guidage,
- la figure 2 est une vue identique celle de la figure 1 sans soc de captage,

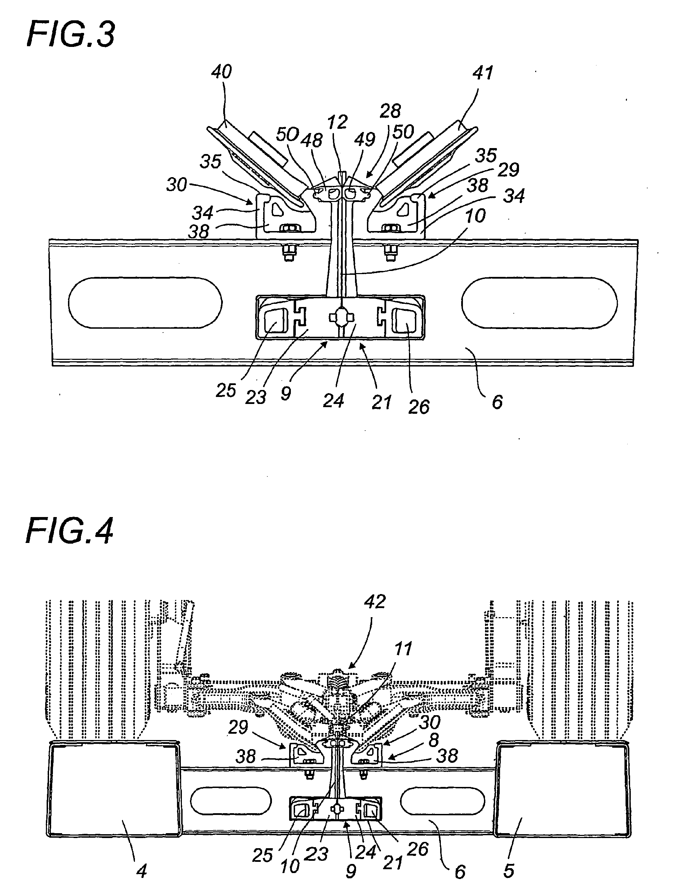

- la figure 3 est une vue en coupe transversale de la figure 1,
- la figure 4 est une vue générale en coupe transversale de la voie montrant en pointillés le train avant du véhicule guidé avec son ensemble de guidage à galets inclinés en appui sur le rail de guidage,

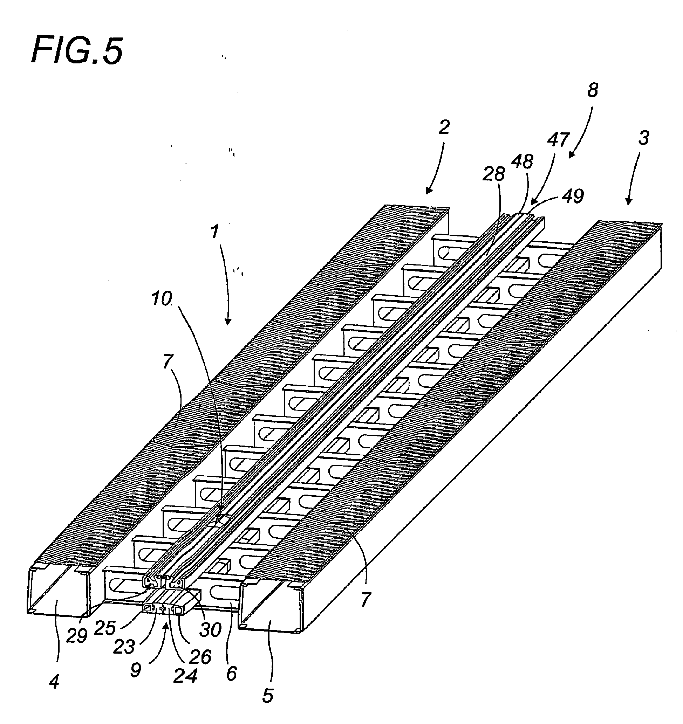

- la figure 5 est une vue schématique en perspective d'une fraction de longueur de voie montrant à une certaine distance, la déformation du joint de protection et d'étanchéité entre les deux demi-rail de guidage.

Le dispositif de captage au sol d'énergie électrique selon l'invention peut être utilisé dans de nombreuses applications du domaine du transport et de celui de la manutention par exemple, les chariots électriques alimentés au sol circulant dans les ateliers et les véhicules de transport en commun urbains sur rails ou autoguidés sur pneus alimentés en énergie électrique à partir du sol.

Le dispositif selon l'invention se monte directement sur le sol ou dans une tranchée réalisée dans le sol entre deux rails ou entre deux pistes de roulage d'un véhicule terrestre électrique.

On peut le monter aussi sur une infrastructure immobilisée à faible profondeur sur un sol préparé, cette infrastructure se développant en longueur pour constituer une voie 1 proprement dite formée de deux rails ou de deux pistes 2 et 3, voie sur laquelle circulent les véhicules et constituée par deux caissons 4 et 5 reliés à intervalles par exemple réguliers par des traverses telles que 6. Les caissons 4 et 5 sont ouverts en partie supérieure pour recevoir à titre de couverture des plaques telles que 7 par exemple nervurées ou striées qui par leur succession forment les pistes 2 et 3. Ces caissons contiennent de préférence les différents câbles électriques pour l'alimentation en énergie de traction du véhicule, mais aussi les sécurités et la signalisation. Ces câbles cheminent le long des caissons et peuvent en sortir à des endroits déterminés. Selon le mode de réalisation représenté, les traverses 6 portent en partie centrale supérieure un ensemble de guidage au sol 8 et en dessous à travers leur âme un ensemble de captage 9 portant les pièces polaires.

Le dispositif selon l'invention se compose des moyens généraux suivants.

Un élément conducteur sous la forme d'un soc 10 est porté de façon isolante par un support 11 de maintien, bras ou autre monté articulé sur le véhicule et se trouve relié de façon amovible, par exemple par un connecteur, sur l'extrémité d'une liaison électrique avec les circuits d'alimentation de la source motrice électrique du véhicule. Cette caractéristique technique de branchement électrique n'est pas représentée sur les dessins.

Ce soc 10 constitue l'élément principal de captage de l'énergie électrique durant le trajet, par son contact électrique continu avec des pièces polaires pendant la marche du véhicule. De ce fait, il sera appelé ci-après soc de captage.

A cet effet, une partie de celui-ci par exemple la base de cet élément ou son extrémité inférieure, est conformée ou agencée pour réaliser un contact continu glissant le long de pièces polaires intégrées en retrait dans des corps linéaires flexibles profilés porte-pièce s'écartant au passage du soc et venant se plaquer latéralement en butée l'un contre l'autre après son passage sous l'effet de moyens linéaires de rappel élastique en rapprochement.

Plus particulièrement, selon la réalisation préférentielle représentée, le soc 10 se présente sous la forme d'une pièce verticale 12 en lame, d'épaisseur suffisante pour assurer une bonne rigidité mécanique mais restant flexible, présentant un chant arrière plan 13 et un chant frontal biseauté 14. La pièce du soc 10 doit cependant présenter une souplesse suffisante pour résister aux éventuels mouvements de roulis et autres occasionnés lors du déplacement du véhicule.

La forme de l'extrémité supérieure de ce soc 10 dépend du type de raccordement électrique et mécanique avec le support 11 porté par le véhicule. Une partie de ce soc, par exemple l'extrémité inférieure, sert au captage de l'énergie électrique. Sa forme exacte dépend de celle des pièces polaires avec lesquelles elle doit être en contact électrique continu pendant le déplacement du véhicule.

Le support 11 ou sa liaison mécanique est formé(e) ou agencé(e) de telle façon que le soc puisse être relevé.

Selon l'exemple non limitatif de forme représenté sur les figures, l'extrémité inférieure est massive et en renflement sous la forme d'un bloc longitudinal 15 de section polygonale, par exemple à six pans ou faces dont quatre grandes faces inclinées telles que 16 et deux faces de chant 17 et 18 sont conductrices et servent à chaque fois de surface plane de contact avec une des surfaces polaires linéaires et planes en regard de pièces polaires ou de conducteurs respectivement 19 et 20 en vue de capter l'énergie électrique par un contact glissant continu le long de celles-ci.

Les pièces polaires ou les conducteurs 19 et 20 sont raccordé(e)s électriquement à la même phase, mais peuvent tout aussi bien et individuellement provenir de deux phases différentes d'une même source. Ceci suppose une structure composite du soc selon laquelle chaque partie est isolée électriquement et reliée à un élément conducteur distinct.

L'ensemble de captage au sol 9 du dispositif selon l'invention se développe linéairement le long de la voie et se trouve maintenu dans un profilé support 21 comportant à intervalles, les raccordements électriques d'alimentation aux deux pièces polaires 19 et 20 par exemple à partir des câbles cheminant dans et le long des caissons 4 et 5.

Ce profilé support 21 se présente, par exemple comme illustré par les dessins, sous la forme d'une goulotte à fond plat 22 et à section sensiblement rectangulaire ouverte vers le haut ou partiellement fermée. Pour réduire les risques d'accident, ce profilé support 21 se trouve de préférence enterré à une distance raisonnable par rapport au niveau de la voie de circulation du véhicule.

Avantageusement, une évacuation d'eau rejoignant un drainage dans le sol peut être prévue dans la paroi de fond 22 de la goulotte 21.

Les pièces polaires 19 et 20 reliées ou non à la même phase, sont par exemple conformées en barres conductrices immobilisées chacune dans une gorge d'un profilé porte-pièce correspondant 23 et 24 filant le long du support 21 en goulotte. Les barres conductrices présentes dans les gorges des profilés porte-pièce sont en retrait chacune par rapport à la face adjacente de chant de ceux-ci. Ces profilés porte-pièces sont montés libres dans le support en goulotte 21 et peuvent ainsi s'y déplacer latéralement en étant portés par le fond de celle-ci.

Ces porte-pièces profilés 23 et 24 sont des blocs linéaires profilés en matière isolante de section par exemple sensiblement carrée ou rectangulaire occupant la majeure partie de l'espace intérieur du profilé en goulotte 21 entre les deux parois latérales qui délimitent l'espace intérieur de celui-ci.

Dans cet espace intérieur de la goulotte, entre chaque porte-pièce 23 et 24 et la paroi latérale adjacente se trouve logé à chaque fois un profilé 25 ou 26 de rappel élastique en rapprochement des porte-pièces, par exemple un profilé tubulaire creux en matière élastomère ou autre matière équivalente, pouvant subir un écrasement local ou une compression latérale locale et générant en retour une force latérale de réaction réalisant un rappel élastique de rapprochement des deux profilés porte-pièces 23 et 24 disposés côte à côte jusqu'à butée des faces de chant en regard.

Bien entendu, d'autres moyens de rappel élastiques conviennent, par exemple des moyens ponctuels disposés à intervalles réguliers en matière élastique ou à ressorts ou autres.

Dans le cas d'un véhicule sur pneus, le guidage s'effectue par l'ensemble de guidage au sol 8 par exemple à monorail central de guidage.

Pour des raisons de sécurité supplémentaire et d'étanchéité, l'ensemble de guidage au sol 8 ou le seul ensemble de captage au sol 27 dans le cas d'un véhicule non guidé ou guidé autrement sera recouvert par une protection permanente 28 au sol ouvrable par le soc ou autrement par exemple par l'ensemble de guidage du véhicule et se refermant après le passage du soc de captage par celui-ci ou par un autre moyen. Cette protection permanente 28 au sol formant couverture d'étanchéité doit cependant être suffisamment rigide pour supporter sans s'ouvrir ni s'affaisser le poids d'un véhicule quelconque par exemple, au niveau d'un croisement.

Cette protection au sol 28 pourra par exemple, se réaliser sous la forme de deux volets ou ailes linéaires se recouvrant ou non en partie médiane. Avantageusement, ces volets ou ces ailes peuvent s'ouvrir par l'action de la partie avant du soc et se refermer en butée par simple effet de rappel élastique en rabattement de butée.

Cette protection permanente au sol 28 apporte aussi une étanchéité par rapport au ruissellement de l'eau vers les contacts électriques.

Dans le cas d'un véhicule quelconque guidé ou non, autre qu'un véhicule sur pneus autoguidé par un monorail central, par exemple un véhicule ferroviaire, l'ensemble de guidage au sol par monorail est inexistant. Dans ce cas, c'est l'ensemble de captage au sol ou noyé à niveau dans le sol qui comportera la protection permanente 28.

Lorsque la réalisation comprend un ensemble de guidage au sol 8 comme celle représentée, c'est cet ensemble de guidage au sol 8 qui est recouvert par la protection permanente 28 au sol.

De manière avantageuse, il peut être envisagé que la surface supérieure du profilé porteur porte la couverture d'isolation qui s'ouvre au passage du soc.

Le fonctionnement du système sécurisé de captage d'énergie électrique selon l'invention découle de manière évidente de la description précédente.

En l'absence du véhicule, les profilés de rappel élastique forcent les deux porte-pièces 23 et 24 en rapprochement l'un vers l'autre jusqu'à la butée des faces de chant en regard, condamnant ainsi l'accès aux pièces polaires 19 et 20 sous tension. Si elle est présente, la protection permanente au sol 28 se trouve en position fermée, assurant ainsi un niveau de sécurité supplémentaire.

Lors du passage du véhicule, le soc de captage 10 ou un autre moyen le précédant, ouvre automatiquement la protection permanente au sol 28 et écarte localement les deux porte-pièces profilés 23 et 24 au fur et à mesure de l'avancée du véhicule, de manière à pouvoir garder en continu le contact électrique avec les pièces polaires 19 et 20. Les parties conductrices du soc 10 sont maintenues en permanence en contact électrique glissant le long de ces pièces polaires linéaires, grâce à la force de rapprochement exercée par les profilés 25 et 26 de rappel élastique.

Après le passage du véhicule, la protection permanente au sol 28 se referme et les profilés 25 et 26 de rappel élastique repoussent les porte-pièces 23 et 24 jusqu'à l'obturation de l'espace intérieur de la goulotte 21.

Dans le cadre d'un fonctionnement normal du véhicule, le système de captage d'énergie électrique au sol selon l'invention est prévu pour que le soc de captage 10 soit inséré en position en début de ligne et ne soit ressorti qu'en fin de ligne. Cependant, le système selon l'invention est suffisamment souple et présente suffisamment de jeu pour permettre l'extraction en pleine ligne du soc de captage en le relevant, par exemple en cas de panne ou de déclenchement d'un dispositif de sécurité du véhicule.

Les moyens décrits ci-dessus peuvent varier dans leur forme sans sortir du cadre de l'invention.

Ainsi, par exemple, l'ensemble de captage 9 est porté par la goulotte 21 ouverte vers le haut, mais celle-ci peut tout aussi bien être presque totalement fermée à demeure ou à l'aide d'obturateurs amovibles sauf selon une fente centrale pour le passage du soc de captage 10 comme il apparaît sur Les figures.

Dans le cas d'une application du système de captage selon l'invention à un véhicule autoguidé et sur pneus de transport urbain au moyen d'un rail central de guidage, le profilé support 21 de l'ensemble de captage 9 inférieur sera préférentiellement enterré sous le rail central de guidage et le soc de captage 10 pourra alors avantageusement être porté par l'ensemble de guidage du véhicule.

Le dispositif de captage d'énergie au sol selon l'invention peut être associé à un ensemble directeur au sol mais aussi à un ensemble guidé par le monorail pour l'alimentation électrique d'un véhicule autrement guidé.

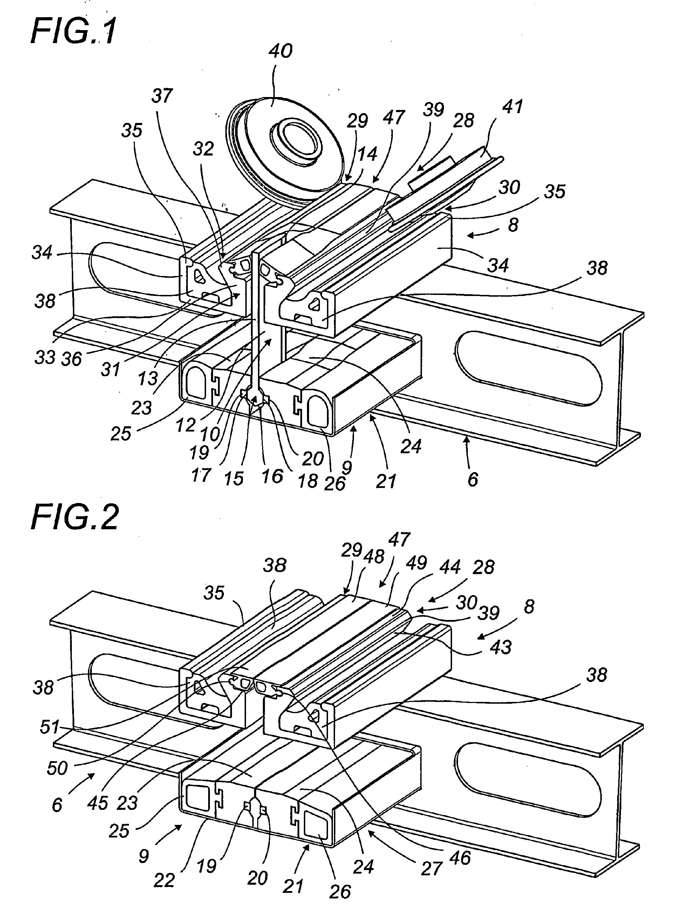

Le dispositif de captage d'énergie au sol selon l'invention est représenté associé à un ensemble directeur au sol dont un mode d'exécution représenté sur les figures 1 et 2 consiste en un profilé de guidage formé de deux demi-rails de guidage 29 et 30 identiques et symétriques disposés côte à côte espacés transversalement l'un de l'autre d'une distance suffisante pour laisser un volume plat libre pour le passage du soc 10 de captage sans risque de contact électrique avec l'un ou l'autre des deux demi-rails 29 et 30.

Les deux demi-rails 29 et 30 étant identiques, il suffit de décrire l'un d'entre eux. Selon la variante représentée, chaque demi-rail 29 ou 30 est un profilé qui affecte une forme générale de section transversale en U se composant d'une aile montante de rail 31 terminée vers le haut par une conformation de rail 32, d'un fond 33 et d'un retour longitudinal vers le haut formant une paroi latérale 34 terminée par une bordure supérieure 35 revenant vers l'intérieur. L'aile montante de rail 31 se compose d'une âme épaisse 36 et d'une tête 37 présentant vue en coupe, une forme de crochet. L'espace situé entre l'âme épaisse 36 et la paroi latérale correspondante 34 est occupé par un joint flexible de remplissage 38 à corps creux tubulaire encastré entre ces parois et la bordure supérieure 35 à retour vers l'intérieur.

Le rail de guidage est fixé à chaque traverse 6 par exemple par boulonnage.

Plus particulièrement, la conformation du rail 32 se compose du côté extérieur d'une saillie linéaire formée d'une piste de roulement 39 sur laquelle roule par sa surface portante un des deux galets 40 et 41 de guidage (figues 1, 3 et 4) de l'ensemble de guidage 42 du véhicule, cette piste étant bordée vers le bas par une rampe inclinée 43 et sur l'autre côté par un chant plat horizontal 44. Du côté intérieur, la conformation est particulière. Elle se compose d'un chant plat horizontal de butée 45 suivi d'un chant perpendiculaire présentant une gorge médiane de réception 46. Cette conformation constitue la surface de réception d'un joint composite linéaire d'étanchéité inter-rail 47 constituant dans cette variante la couverture permanente au sol 28. Ce joint composite 47 est fractionné en deux joints horizontaux identiques et symétriques 48 et 49, soulevables par le passage du soc de captage 10 comme représenté sur la figure 1. Les deux joints 48 et 49 sont immobilisés au repos à plat, bord à bord et en butée contre le chant plat horizontal de butée 45 de la tête 37 du demi-rail correspondant 29 ou 30 comme représenté sur la figure 2. Chaque joint 48 ou 49 présente un volume creux tubulaire à proximité des bords en regard pour lui conférer une certaine souplesse à la déformation. Le bord opposé se compose d'une languette longitudinale 50 et d'une lèvre supérieure 51 comme représenté sur les figures 1 et 2. La languette longitudinale 50 vient occuper la gorge médiane de réception 46 du demi-rail correspondant 29 ou 30 et la lèvre supérieure 51 porter sur le chant plat horizontal supérieur 44 du demi-rail correspondant 29 ou 30. Cette association de formes qui sont combinées à l'élasticité du joint 48 ou 49 constituent l'équivalent fonctionnel d'une articulation permettant à chaque joint 48 ou 49 de se soulever localement au passage du soc de captage 10 en jouant sur 1a déformation de chaque joint au niveau de sa languette 50 et de sa lèvre longitudinale 51 au voisinage du soc 10 comme représenté sur la figure 1 et de se refermer derrière le soc par effet de rappel élastique.

## Revendications

1. Dispositif de captage d'énergie électrique au sol à sécurité renforcée pour un véhicule terrestre du type à alimentation électrique au sol par contact glissant avec au moins une pièce polaire se composant d'un soc de captage (10), présentant une partie supérieure et une partie basse collectrice, d'un support (11) de maintien au véhicule de la partie supérieure de ce soc de captage (10), de moyens de relevage de ce soc et de moyens de raccordement électrique au circuit d'alimentation du véhicule, ce soc (10) étant isolé électriquement du sol et des structures de voie, et dont la partie haute vient écarter et refermer sur son passage une protection supérieure électrique et mécanique formée de deux éléments électriquement isolants linéaires et juxtaposés jointifs longitudinalement côte à côte **caractérisé en ce que** vient s'adjoindre à la protection supérieure, une protection inférieure disposée de part et d'autre de la partie basse collectrice du soc (10) qui se trouve prise entre deux porte-pièces (23) et (24) profilés disposés côte à côte en regard, filant sur le sol ou dans le sol le long de la voie et portés par un support profilé porteur (21) à fond sensiblement plat et à deux parois latérales formant un ensemble de captage (9), les pièces ou zones conductrices de la partie collectrice du soc (10) étant maintenues en contact électrique glissant le long de deux conducteurs ou pièces conductrices (19) et (20) porté(e)s respectivement par un porte-pièce (23) et (24), chacun de ces porte-pièces étant prévu sur toute sa longueur déplaçable et en rappel élastique de rapprochement vers son homologue adjacent par un moyen élastique compressible engendrant localement une force élastique de rappel pour leur rapprochement après compression locale latérale due au passage du soc ou une série de moyens ponctuels de rappel.

2. Dispositif de captage d'énergie électrique au sol selon la revendication précédente **caractérisé en ce que** le moyen engendrant la force de rappel en rapprochement de l'un au moins des deux porte-pièces (23) ou (24) est un corps profilé tubulaire élastique (25) ou (26) susceptible de compression latérale et logé dans l'espace existant entre ce porte-pièce et la paroi latérale correspondante du support porteur (21) de l'ensemble de captage (9).

3. Dispositif de captage d'énergie électrique au sol selon l'une quelconque des revendications précédentes **caractérisé en ce que** le corps du soc (10) est une pièce plate (12) à chant avant biseauté (14) et **en ce que** son extrémité inférieure est conformée en renflement sous la forme d'un bloc longitudinal (15) à chants latéraux plats (17) et (18) dont au moins l'un d'entre eux vient porter à contact glissant sur le conducteur ou la pièce polaire linéaire (19) ou (20) en regard porté(e) par le porte-pièce correspondant (23) ou (24).

4. Dispositif de captage d'énergie électrique au sol selon l'une quelconque des revendications précédentes **caractérisé en ce que** chaque conducteur (19) ou (20) est raccordé à une phase différente et alimente le soc (10) selon deux voies électriques.

5. Dispositif de captage d'énergie électrique au sol selon la revendication précédente **caractérisé en ce que** le soc de captage (10) est une structure composite en deux éléments conducteurs différents isolés électriquement entre eux et relié chacun à une phase différente.

6. Dispositif de captage d'énergie électrique au sol selon l'une quelconque des revendications précédentes **caractérisé en ce que** les porte-pièces polaires sont en matériau isolant flexible de manière à permettre un écartement local au droit du passage du soc.

7. Dispositif de captage d'énergie électrique au sol selon l'une quelconque des revendications précédentes **caractérisé en ce que** les conducteurs (19) et (20) sont insérés chacun dans une gorge prévue dans une cavité dans une face de chant d'un des porte-pièces (23) et (24) faisant face à son homologue.

8. Dispositif de captage d'énergie électrique au sol selon l'une quelconque des revendications précédentes **caractérisé en ce que** le support profilé porteur (21) est enterré et **en ce que** la surface au sol à ce niveau est protégée par une protection (28) selon une couverture d'isolation qui s'ouvre par le passage du soc (10) et se referme derrière lui.

9. Dispositif de captage d'énergie électrique au sol selon la revendication précédente **caractérisé en ce que** la surface supérieure du profilé porteur (21) porte la protection (28) en couverture d'isolation qui s'ouvre au passage du soc (10) et se referme derrière lui.

10. Dispositif de captage d'énergie électrique au sol selon l'une quelconque des revendications précédentes **caractérisé en ce que** le dispositif de captage électrique alimente un véhicule guidé par un rail central d'un ensemble de guidage au sol (8).

11. Dispositif de captage d'énergie électrique au sol selon l'une quelconque des revendications précédentes **caractérisé en ce que** le soc (10) est combiné au bras de guidage (42) du véhicule autoguidé.

12. Dispositif de captage d'énergie électrique au sol selon la revendication 1 **caractérisé en ce que** le rail de guidage est constitué de deux demi-rail (29) et (30) disposés côte à côte sur chacun desquels roule un galet de guidage (40) ou (41) de l'ensemble de guidage (42) du véhicule.

13. Dispositif de captage d'énergie électrique au sol selon la revendication précédente **caractérisé en ce que** chaque demi-rail (29) ou (30) est un profilé qui affecte une forme générale de section transversale en U se composant d'une aile montante de rail (31) terminée vers le haut par une conformation de rail (32), d'un fond (33) et d'un retour longitudinal vers le haut formant une paroi latérale (34) terminée par une bordure supérieure (35) revenant vers l'intérieur.

14. Dispositif de captage d'énergie électrique au sol selon la revendication précédente **caractérisé en ce que** l'aile montante de rail (31) présente une âme épaisse (36) et une tête (37) présentant vue en coupe, une forme de crochet se composant du côté extérieur d'une saillie linéaire formée d'une piste de roulement (39) sur laquelle roule l'une des galets de guidage (40) ou (41) par sa surface portante, cette piste de roulement (39) étant bordée vers le bas d'une rampe inclinée (43) et sur l'autre côté d'un chant plat horizontal (44) et du côté intérieur, cette conformation se composant d'un chant plat horizontal de butée (45) suivi d'un chant perpendiculaire présentant une gorge médiane de réception (46), cette conformation constituant la surface de réception d'un joint linéaire d'étanchéité (47).

15. Dispositif de captage d'énergie électrique au sol selon les revendications 13 ou 14 **caractérisé en ce que** l'espace entre la paroi latérale et l'âme épaisse (36) est rempli par un joint flexible (38) à face supérieure inclinée, joint immobilisé entre ces parois et la bordure supérieure (35) en retour vers l'intérieur.

16. Dispositif de captage d'énergie électrique au sol selon la revendication 12 **caractérisé en ce que** le soc de captage (10) traverse le rail de guidage et un joint composite (47) dont les deux parties s'écartent ou se soulèvent localement au passage du soc (10) et se rabattent après son passage.

17. Dispositif de captage d'énergie électrique au sol selon la revendication précédente **caractérisé en ce que** le joint composite (47) est formé de deux joints linéaires (48) et (49) disposés côte à côte se rejoignant par un de leurs bords en partie médiane et constituant chacun une articulation linéaire de pivotement par leur bord opposé avec la conformation en regard de l'extrémité du demi-rail (29) ou (30) correspondant.

18. Dispositif de captage d'énergie électrique au sol selon l'une quelconque des revendications précédentes **caractérisé en ce qu'**il est prévu pour un véhicule guidé par l'ensemble de captage d'énergie électrique au sol se déplaçant le long du rail de guidage.

19. Dispositif de captage d'énergie électrique au sol selon l'une quelconque des revendications précédentes de 1 à 17 **caractérisé en ce qu'**il est prévu pour un véhicule autrement guidé que par l'ensemble de captage d'énergie électrique au sol se déplaçant le long du rail de guidage.

## Claims

1. Device for collecting electrical energy at ground level with enhanced safety, for a terrestrial vehicle of the type which is supplied with power at ground level by sliding contact with at least one polar part, which device is composed of a plough-type collecting member (10) having an upper part and a lower collecting part, of a support (11) for holding the upper part of the plough-type collecting member (10) on the vehicle, of means for raising the plough-type member, and of means for electrical connection to the vehicle supply circuit, the plough-type member (10) being electrically insulated from the ground and the track structures, and the upper part thereof separates and closes again, as it passes, an upper electrical and mechanical protection formed by two electrically insulating linear elements which are juxtaposed longitudinally and contiguously, side by side, **characterised in that**, in addition to the upper protection, there is a lower protection disposed on either side of the lower collecting part of the plough-type member (10), which is held between two profiled part holders (23) and (24) which are disposed side by side and facing one another, run on the ground or in the ground along the track and are carried by a profiled carrying support (21) having a substantially flat base and two lateral walls forming a collecting assembly (9), the conducting parts or zones of the collecting part of the plough-type member (10) being maintained in sliding electrical contact along two conductors or conducting parts (19) and (20) carried by respective part holders (23) and (24), each of those part holders being provided to be displaceable over its entire length and to have resilient return of approach towards its adjacent homologue by a compressible resilient means which generates, locally, a resilient return force to bring them back together after local lateral compression due to the passage of the plough-type member or a series of return means at discrete points.

2. Device for collecting electrical energy at ground level according to the preceding claim, **characterised in that** the means generating the return force of approach for at least one of the two part holders (23) or (24) is a resilient tubular profiled body (25) or (26) which is capable of lateral compression and is housed in the space that exists between that part holder and the corresponding lateral wall of the carrying support (21) of the collecting assembly (9).

3. Device for collecting electrical energy at ground level according to any one of the preceding claims, **characterised in that** the body of the plough-type member (10) is a flat part (12) having a bevelled front edge (14), and **in that** its lower end is formed as a bulge in the form of a longitudinal block (15) having flat lateral edges (17) and (18), at least one of which comes to bear with sliding contact on the conductor or the opposite linear polar part (19) or (20) carried by the corresponding part holder (23) or (24).

4. Device for collecting electrical energy at ground level according to any one of the preceding claims, **characterised in that** each conductor (19) or (20) is connected to a different phase and supplies power to the plough-type member (10) via two electrical pathways.

5. Device for collecting electrical energy at ground level according to the preceding claim, **characterised in that** the plough-type collecting member (10) is a composite structure having two different conductor elements that are electrically insulated from one another and are each connected to a different phase.

6. Device for collecting electrical energy at ground level according to any one of the preceding claims, **characterised in that** the holders for the polar parts are made of flexible insulating material so as to permit local separation for passage of the plough-type member (10).

7. Device for collecting electrical energy at ground level according to any one of the preceding claims, **characterised in that** the conductors (19) and (20) are each inserted into a groove provided in a cavity in an edge face of one of the part holders (23) and (24) facing its homologue.

8. Device for collecting electrical energy at ground level according to any one of the preceding claims, **characterised in that** the profiled carrying support (21) is buried, and **in that** the surface on the ground at that level is protected by a protection (28) in the form of an insulating cover which is opened by passage of the plough-type member (10) and closes again behind it.

9. Device for collecting electrical energy at ground level according to the preceding claim, **characterised in that** the upper surface of the carrying profile (21) carries the protection (28) as an insulating cover which opens when the plough-type member (10) passes and closes again behind it.

10. Device for collecting electrical energy at ground level according to any one of the preceding claims, **characterised in that** the device for collecting electrical energy supplies power to a vehicle which is guided by a central rail of a ground-level guiding assembly (8).

11. Device for collecting electrical energy at ground level according to any one of the preceding claims, **characterised in that** the plough-type member (10) is combined with the guide arm (42) of the automatically controlled vehicle.

12. Device for collecting electrical energy at ground level according to claim 1, **characterised in that** the guide rail is constituted by two half-rails (29) and (30) which are disposed side by side and on each of which there runs a guide roller (40) or (41) of the guide assembly (42) of the vehicle.

13. Device for collecting electrical energy at ground level according to the preceding claim, **characterised in that** each half-rail (29) or (30) is a profile which has a generally U-shaped transverse cross-section consisting of a vertical rail portion (31) terminated at the top by a shaped rail portion (32), a base (33) and a longitudinal upward return portion forming a lateral wall (34) which is terminated by an upper edge (35) that is turned back towards the inside.

14. Device for collecting electrical energy at ground level according to the preceding claim, **characterised in that** the vertical rail portion (31) has a thick core (36) and a head (37) which, when viewed in cross-section, has the shape of a hook which is composed on the outside of a linear projection formed by a running track (39) on which there runs one of the guide rollers (40) or (41) by way of its bearing surface, the running track (39) being bordered at the bottom by an inclined ramp (43) and on the other side by a flat horizontal edge (44) and on the inner side, the shaped portion being composed of a flat horizontal stop edge (45) followed by a perpendicular edge having a middle receiving groove (46), the shaped portion constituting the receiving surface for a linear gasket (47).

15. Device for collecting electrical energy at ground level according to claim 13 or 14, **characterised in that** the space between the lateral wall and the thick core (36) is filled by a flexible seal (38) having a sloping upper face, which seal (38) is immobilised between those walls and the upper edge (35) that is turned back towards the inside.

16. Device for collecting electrical energy at ground level according to claim 12, **characterised in that** the plough-type collecting member (10) passes through the guide rail and a composite seal (47), the two parts of which separate or are raised locally as the plough-type member (10) passes and are lowered again after the plough-type member (10) has passed.

17. Device for collecting electrical energy at ground level according to the preceding claim, **characterised in that** the composite seal (47) is formed of two linear seals (48) and (49) which are arranged side by side and meet at one of their edges in a middle section, and each of which constitutes a linear pivoting articulation by their opposite edge with the shaped portion opposite the end of the corresponding half-rail (29) or (30).

18. Device for collecting electrical energy at ground level according to any one of the preceding claims, **characterised in that** it is provided for a vehicle guided by the assembly for collecting electrical energy at ground level moving along the guide rail.

19. Device for collecting electrical energy at ground level according to any one of the preceding claims 1 to 17, **characterised in that** it is provided for a vehicle guided other than by the assembly for collecting electrical energy at ground level moving along the guide rail.

## Patentansprüche

1. Hochsichere Vorrichtung zur Aufnahme elektrischer Energie auf dem Boden für ein Landfahrzeug mit elektrischer Energieversorgung vom Boden her durch Gleitkontakt, mit wenigstens einem Polteil, welches von einer Aufnehmerschar (10) mit einem oberen und einem unteren Kollektorabschnitt, einem Halteträger (11) an dem Fahrzeug am oberen Abschnitt der Aufnehmerschar (10), Mitteln zum Anheben der Schar und Mitteln zur elektrischen Verbindung mit einem Versorgungskreis des Fahrzeugs gebildet ist, wobei die Schar (10) gegen den Boden sowie gegen die Fahrbahnstrukturen elektrisch isoliert ist und deren oberer Abschnitt beim Passieren einen oberen elektrischen und mechanischen Schutz aufspreizt und wieder verschließt, welcher von zwei elektrisch isolierten, linearen und nebeneinander angeordneten, längsseitig nebeneinander aneinandergesetzten Elementen gebildet ist, **dadurch gekennzeichnet, dass** dem oberen Schutz ein unterer Schutz zugeordnet ist, welcher an beiden Seiten des unteren Kollektorabschnittes der Schar (10) angeordnet ist, der zwischen zwei profilierten, gegenüberliegend nebeneinander angeordneten Tragteilen (23) und (24) aufgenommen ist, welche auf dem Boden oder im Boden entlang der Fahrbahn verlegt und von einem profilierten Halteträger (21) mit im Wesentlichen ebenem Boden und mit zwei Seitenwänden, welche eine Aufnehmereinheit (9) bilden, getragen sind, wobei die leitenden Teile oder Bereiche des Kollektorabschnittes der Schar (10), welche unter elektrischem Kontakt gehalten sind, entlang zwei Leitern oder Leiterstücken (19) und (20) gleiten, die jeweils von einem Tragteil (23) und (24) getragen sind, wobei jedes der Tragteile (23, 24) auf deren gesamte verlagerbare Länge vorgesehen und durch ein elastisches, kompressibles Mittel, welches lokal eine elastische Rückstellkraft zu ihrer Annäherung nach einer lokalen seitlichen Kompression aufgrund des Passierens der Schar oder einer Reihe von punktuellen Rückstellmitteln erzeugt, elastisch in Annäherungsrichtung seines benachbarten Gegenstückes vorbelastet ist.

2. Vorrichtung zur Aufnahme elektrischer Energie auf dem Boden nach dem vorangehenden Anspruch, **dadurch gekennzeichnet, dass** das Mittel, welches die Rückstellkraft zur Annäherung wenigstens eines der beiden Tragteile (23) oder (24) erzeugt, von einem profilierten, elastischen Rohrkörper (25) oder (26) gebildet ist, welcher zu einer seitlichen Kompression imstande und in dem Raum aufgenommen ist, der zwischen diesem Tragteil und der entsprechenden Seitenwand des Halteträgers (21) der Aufnehmereinheit (9) gebildet ist.

3. Vorrichtung zur Aufnahme elektrischer Energie auf dem Boden nach einem der vorangehenden Ansprüche, **dadurch gekennzeichnet, dass** der Körper der Schar (10) von einem flachen Teil (12) mit abgeschrägter vorderer Schmalseite gebildet ist, und dass sein unteres Ende mit einer Verdickung in Form eines sich längs erstreckenden Blockes (15) mit flachen Seitenkanten (17) und (18) ausgebildet ist, von welchen wenigstens eine mit dem gegenüberliegenden Leiter oder linearen Polteil (19) oder (20), welches von dem entsprechenden Tragteil (23) oder (24) getragen ist, in Gleitkontakt steht.

4. Vorrichtung zur Aufnahme elektrischer Energie auf dem Boden nach einem der vorangehenden Ansprüche, **dadurch gekennzeichnet, dass** jeder Leiter (19) oder (20) mit einer verschiedenen Phase verbunden ist und die Schar (10) entsprechend zweier Stromschienen versorgt.

5. Vorrichtung zur Aufnahme elektrischer Energie auf dem Boden nach dem vorangehenden Anspruch, **dadurch gekennzeichnet, dass** die Aufnehmerschar (10) eine Verbundstruktur aus zwei verschiedenen Leiterelementen aufweist, welche elektrisch gegeneinander isoliert und jeweils mit einer unterschiedlichen Phase verbunden sind.

6. Vorrichtung zur Aufnahme elektrischer Energie auf dem Boden nach einem der vorangehenden Ansprüche, **dadurch gekennzeichnet, dass** die Pol-Tragteile aus einem flexiblen, isolierenden Material gebildet sind derart, um eine lokale Aufspreizung anlässlich des Passierens der Schar zu ermöglichen.

7. Vorrichtung zur Aufnahme elektrischer Energie auf dem Boden nach einem der vorangehenden Ansprüche, **dadurch gekennzeichnet, dass** die Leiter (19) und (20) jeweils in eine Kehle eingefügt sind, welche in einer Ausnehmung an einer Seite der Kante eines der Tragteile vorgesehen ist, die dessen Gegenstück zugewandt ist.

8. Vorrichtung zur Aufnahme elektrischer Energie auf dem Boden nach einem der vorangehenden Ansprüche, **dadurch gekennzeichnet, dass** der profilierte Halteträger (21) in den Boden eingelassen ist, und dass die Oberfläche des Bodens auf diesem Niveau durch einen Schutz (28) entsprechend einer isolierenden Abdeckung geschützt ist, welche sich beim Passieren der Schar (10) öffnet und sich hinter derselben wieder verschließt.

9. Vorrichtung zur Aufnahme elektrischer Energie auf dem Boden nach dem vorangehenden Anspruch, **dadurch gekennzeichnet, dass** die obere Fläche des profilierten Trägers (21) den Schutz (28) der isolierenden Abdeckung trägt, welche sich beim Passieren der Schar (10) öffnet und sich nach derselben wieder verschließt.

10. Vorrichtung zur Aufnahme elektrischer Energie auf dem Boden nach einem der vorangehenden Ansprüche, **dadurch gekennzeichnet, dass** die Vorrichtung zur Aufnahme von Elektrizität ein Fahrzeug versorgt, welches durch eine zentrale Schiene einer Führungseinheit auf dem Boden (8) geführt ist.

11. Vorrichtung zur Aufnahme elektrischer Energie auf dem Boden nach einem der vorangehenden Ansprüche, **dadurch gekennzeichnet, dass** die Schar (10) mit dem Führungsarm (42) eines selbstgeführten Fahrzeugs gekoppelt ist.

12. Vorrichtung zur Aufnahme elektrischer Energie auf dem Boden nach Anspruch 1, **dadurch gekennzeichnet, dass** die Führungsschiene von zwei nebeneinander angeordneten Halbschienen (29) und (30) gebildet ist, auf welchen jeweils eine Führungsrolle (40) oder (41) der Führungseinheit (42) des Fahrzeugs rollt.

13. Vorrichtung zur Aufnahme elektrischer Energie auf dem Boden nach dem vorangehenden Anspruch, **dadurch gekennzeichnet, dass** jede Halbschiene (29) oder (30) von einem Profil gebildet ist, dessen Querschnittsform im Wesentlichen die Form eines "U" besitzt und sich aus einem ansteigenden Flügel (31) der Schiene, welcher nach oben in einer Schienenkonfiguration endet, aus einem Boden (33) und aus einem nach oben gerichteten, eine Seitenwand (34) bildenden, längsgerichteten Rücklauf, welcher in einem oberen, zur Innenseite hin vorstehenden Rand (35) endet, zusammensetzt.

14. Vorrichtung zur Aufnahme elektrischer Energie auf dem Boden nach dem vorangehenden Anspruch, **dadurch gekennzeichnet, dass** der ansteigende Flügel (31) der Schiene einen verdickten Steg (36) und einen Kopf (37) aufweist, welcher einen Querschnitt in Form eines Hakens besitzt, der an der Außenseite aus einem linearen Vorsprung gebildet ist, welcher eine Rollspur (39) bildet, auf welcher eine der Führungsrollen (40) oder (41) mit ihrer tragenden Fläche rollt, wobei die Rollspur (39) nach unten von einer geneigten Ebene (43) und zur anderen Seite hin von einer horizontalen, flachen Kante (44) begrenzt ist, wobei sich diese Ausgestaltung nach Innen hin aus einer horizontalen, flachen Anschlagkante (45), gefolgt von einer senkrechten Kante mit einer mittleren Aufnahmekehle (46) zusammensetzt und diese Ausgestaltung die Aufnahmefläche einer linearen Abdichtung (47) bildet.

15. Vorrichtung zur Aufnahme elektrischer Energie auf dem Boden nach Anspruch 13 oder 14, **dadurch gekennzeichnet, dass** der Raum zwischen der Seitenwand (34) und dem verdickten Steg (36) von einer nachgiebigen Dichtung (38) mit einer geneigten oberen Fläche ausgefüllt ist, wobei die Dichtung zwischen diesen Wänden und dem oberen, zur Innenseite hin vorstehenden Rand (35) des Rücklaufs festgelegt ist.

16. Vorrichtung zur Aufnahme elektrischer Energie auf dem Boden nach Anspruch 12, **dadurch gekennzeichnet, dass** die Aufnehmerschar (10) die Führungsschiene sowie eine zusammengesetzte Abdichtung (47) durchsetzt, deren beide Abschnitte beim Passieren der Schar (10) lokal zurückweichen oder angehoben werden und sich nach deren Passieren wieder umlegen.

17. Vorrichtung zur Aufnahme elektrischer Energie auf dem Boden nach dem vorangehenden Anspruch, **dadurch gekennzeichnet, dass** die zusammengesetzte Abdichtung (47) von zwei linearen Dichtungen (48) und (49) gebildet ist, welche nebeneinander angeordnet und durch einen ihrer Ränder im mittleren Abschnitt zusammengefügt sind und jeweils ein lineares Gelenk an ihrem entgegengesetzten Rand mit der Ausgestaltung gegenüber dem Ende der entsprechenden Halbschiene (29) oder (30) bilden.

18. Vorrichtung zur Aufnahme elektrischer Energie auf dem Boden nach einem der vorangehenden Ansprüche, **dadurch gekennzeichnet, dass** sie für ein durch die Einheit zur Aufnahme elektrischer Energie auf dem Boden, welche sich entlang der Führungsschiene verlagert, geführtes Fahrzeug vorgesehen ist.

19. Vorrichtung zur Aufnahme elektrischer Energie auf dem Boden nach einem der vorangehenden Ansprüche 1 bis 17, **dadurch gekennzeichnet, dass** sie für ein anderweitig als durch Einheit zur Aufnahme elektrischer Energie auf dem Boden, welche sich entlang der Führungsschiene verlagert, geführtes Fahrzeug vorgesehen ist.
